# EUROPÄISCHE PATENTSCHRIFT

(11) **EP 1 976 924 B1**
(45) Veröffentlichungstag und Bekanntmachung des Hinweises auf die Patenterteilung: **21.10.2009**
(21) Anmeldenummer: 07704104.4
(22) Anmeldetag: 24.01.2007
(51) Int. Cl.: C08K 5/09, C08K 5/5435

(54) **ALKOXYSILANTERMINIERTE POLYMERE ENTHALTENDE POLYMERABMISCHUNGEN**
POLYMER MIXTURES CONTAINING ALKOXYSILANE TERMINATED POLYMERS
MÉLANGES POLYMÈRES CONTENANT DES POLYMÈRES À TERMINAISON ALCOXYSILANE

(30) Priorität: 26.01.2006 DE 102006003822
(43) Veröffentlichungstag der Anmeldung: 08.10.2008
(73) Patentinhaber: Wacker Chemie AG, 81737 München (DE)
(72) Erfinder: SCHINDLER, Wolfram, 84577 Tüssling (DE)
(74) Vertreter: Fritz, Helmut
(86) Internationale Anmeldenummer: PCT/EP2007/050672
(87) Internationale Veröffentlichungsnummer: WO 2007/085604

(56) Entgegenhaltungen:
- EP-A- 1 584 648
- WO-A-01/12693
- WO-A-03/014226

## Beschreibung

Die Erfindung betrifft Polymerabmischungen, die alkoxysilanterminierte Polymere, Bernsteinsäureanhydrid-alkoxysilan und Aminoalkyl-alkoxysilan enthalten, deren Herstellung und Verwendung.

Polymersysteme, die über reaktive Alkoxysilylgruppen verfügen, sind seit langem bekannt. In Gegenwart von Luftfeuchtigkeit sind diese alkoxysilantermierten Polymere bereits bei Raumtemperatur in der Lage, unter Abspaltung der Alkoxygruppen miteinander zu kondensieren. Je nach Gehalt an Alkoxysilangruppen und deren Aufbau bilden sich dabei hauptsächlich langkettige Polymere (Thermoplaste), relativ weitmaschige dreidimensionale Netzwerke (Elastomere) oder aber hochvernetzte Systeme (Duroplaste).

Dabei kann es sich sowohl um alkoxysilanterminierte Polymere mit organischem Rückgrat handeln, z.B. um Polyurethane, Polyester, Polyether etc., beschrieben u.a. in EP-A-269 819, EP-A-931 800, WO 00/37533, US 3,971,751 und DE 198 49 817, als auch um Polymere, deren Rückgrat ganz oder zumindest zum Teil aus Organosiloxanen besteht, beschrieben u.a. in WO 96/34030 und US 5,254,657.

Entsprechend der zahllosen Möglichkeiten zur Gestaltung von derartigen silanterminierten Polymersystemen lassen sich sowohl die Eigenschaften der unvernetzten Polymere bzw. der polymerhaltigen Mischungen (Viskosität, Schmelzpunkt, Löslichkeiten etc.) als auch die Eigenschaften der fertig vernetzten Massen (Härte, Elastizität, Zugfestigkeit, Reißdehnung, Hitzebeständigkeit etc.) nahezu beliebig einstellen. Entsprechend vielfältig sind daher auch die Einsatzmöglichkeiten von derartigen silanterminierten Polymersystemen. So lassen sie sich beispielsweise zur Herstellung von Elastomeren, Dichtstoffen, Klebstoffen, elastischen Klebesystemen, harten und weichen Schäumen, den unterschiedlichsten Beschichtungssystemen oder für Abformmassen verwenden. Diese Produkte lassen sich in jeder Form applizieren, wie z.B. streichen, sprühen, gießen, pressen, spachteln etc., je nach Zusammensetzung der Formulierungen.

Neben der Härtung der Massen und den mechanischen Eigenschaften des Vulkanisats sind vorallem bei Anwendungen im Kleb- und Dichtstoffbereich eine gute Haftung auf unterschiedlichsten Substraten gefordert. Formulierungen silanvernetzender Polymere zeigen hier in aller Regel ein sehr gutes Haftungsprofil. Dieses Haftungsprofil wird vielfach durch Zusatz von organofunktionellen Haftvermittlern verbessert bzw. optimiert. Die Anwendung derartiger Silane ist Stand der Technik und in diversen Monographien oder Veröffentlichungen beschrieben (z.B. Silanes and other coupling agents, Vol 1-3 Editor K.L. Mittal VSP, Utrecht 1992; Silane Coupling Agents, E.P. Plueddemann 2nd Edition, Plenum Press, New York 1991). In einigen Fällen und Formulierungen reicht der Zusatz eines einfachen Haftvermittlers aber oft nicht mehr aus. Speziell, wenn die ausgehärteten Produkte unter Feuchtigkeitszutritt gelagert werden.

In EP 1179571 A werden härtbare Massen auf Basis silanvernetzender Polymere beschrieben, bei denen eine Mischung aus einem Epoxysilan und einem Aminosilan als Haftvermittler eingesetzt werden. Dabei spielt auch die Vorgehensweise bei der Formulierung eine Rolle. EP 997469 A beschreibt neuartige oligomere Siloxane auf Basis von oligomerisierten Aminosilanen die einen positiven Einfluss auf den Haftungsaufbau in silanvernetzenden Systemen haben. Daneben werden auch neuartige Silanstrukturen wie in EP 1216263 A beschrieben, die einen günstigen Einfluss auf die Haftung haben.

Gegenstand der Erfindung sind Polymerabmischungen, die
A) alkoxysilanterminierte Polymere (A) mit mindestens einer Endgruppe der allgemeinen Formel (1)

   -A-(CH₂)ₘ-SiR¹ₐ(OR²)₃₋ₐ (1)

   wobei
   - **A**: eine zweibindige Bindegruppe ausgewählt aus -O-, -S-, -(R³)N-, -O-CO-N (R³) -, -N (R³) -CO-O-, -N(R³)-CO-NH-, -NH-CO-N (R³) -, -N (R³) -CO-N (R³) -,
   - **R¹**: einen gegebenenfalls halogensubstuierten Alkyl-, Cycloalkyl-, Alkenyl- oder Arylrest mit 1-10 Kohlenstoffatomen,
   - **R²**: einen Alkylrest mit 1-6 Kohlenstoffatomen oder einen ω-Oxaalkyl-alkylrest mit insgesamt 2-10 Kohlenstoffatomen,
   - **R³**: Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
   - **a**: eine ganze Zahl von 0 bis 2 und
   - **m**: eine ganze Zahl von 1 bis 6 bedeuten,
B) Bernsteinsäureanhydrid-alkoxysilan (B) der allgemeinen Formel (2) 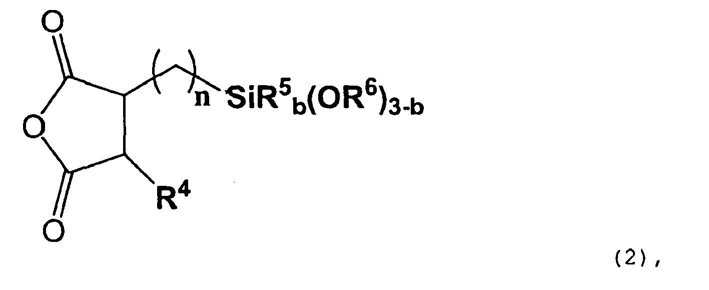
wobei
- **R⁴**: Wasserstoff oder einen Alkylrest mit 1-6 Kohlenstoffatomen
- **R⁵**: einen gegebenenfalls halogensubstuierten Alkyl-, Cycloalkyl-, Alkenyl- oder Arylreste mit 1-10 Kohlenstoffatomen,
- **R⁶**: einen Alkylrest mit 1-6 Kohlenstoffatomen oder ω-Oxaalkyl-alkylrest mit insgesamt 2-10 Kohlenstoffatomen,
- **n**: eine ganze Zahl von 1 bis 6 und
- **b**: eine ganze Zahl von 0 bis 2 bedeuten, und Aminoalkyl-alkoxysilan (C) enthalten.

Der Zusatz von Silan (B) der allgemeinen Formel (2) bewirkt eine deutliche Verbesserung der generellen Haftung, die durch Verwendung der bisher eingesetzten Silane nicht erreicht werden kann.

Die Hauptketten der einsetzbaren alkoxysilanterminierten Polymere (A) können verzweigt oder unverzweigt sein. Die mittleren Kettenlängen können beliebig entsprechend der jeweils gewünschten Eigenschaften sowohl der unvernetzten Mischung als auch der ausgehärteten Masse angepaßt werden. Sie können aus unterschiedlichen Bausteinen aufgebaut sein. Üblicherweise sind dies Polysiloxane, Polysiloxan-Urea/Urethan-Copolymere, Polyurethane, Polyharnstoffe, Polyether, Polyester, Polyacrylate und -methacrylate, Polycarbonate, Polystyrole, Polyamide, Polyvinylester oder Polyolefine wie z.B. Polyethylen, Polybutadien, Ethylen-Olefincopolymere oder Styrol-Butadiencopolymere. Selbstverständlich können auch beliebige Mischungen oder Kombinationen aus Polymeren mit verschiedenen Hauptketten eingesetzt werden.

Zur Herstellung von Polymeren (A) mit Silanterminierungen der allgemeinen Formel (1) sind eine Vielzahl von Möglichkeiten bekannt, insbesondere:
- Copolymerisationen unter Beteiligung von ungesättigten Monomeren, die über Gruppen der allgemeinen Formel (1) verfügen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Aufpfropfung von ungesättigten Monomeren, die über Gruppen der allgemeinen Formel (1) verfügen auf Thermoplaste wie Polyethylen. Beispiele für derartige Monomere wären Vinyltrimethoxysilan, Vinyl-methyldimethoxysilan, (Meth-) Acryloyloxypropyl-trimethoxysilan, (Meth-)Acryloyloxymethyl-trimethoxysilan, (Meth-)Acryloyloxymethyl-methyldimethoxysilan oder auch die entsprechenden Ethoxysilylverbindungen.
- Hydrosilylierung von H-Silanen wie Dimethoxymethylsilan, Diethoxymethylsilan, Trimethoxymethylsilan oder Triethoxysilan an ungestättigten, endständigen oder kettenständigen Doppelbindungen meist unter Platinkatalyse.
- Umsetzung eines Präpolymeren (A1) mit einem oder mehreren Organosilanen (A2) der allgemeinen Formel (4)

   C-B-(CH₂)ₘ-SiR¹ₐ(OR²)₃₋ₐ (4)

   in der **R¹, R², R³, m** und **a** die oben genannten Bedeutungen aufweisen,
   - **B**: ein Sauerstoff-, Stickstoff- oder Schwefelatom bedeutet und
   - **C-B-**: eine funktionelle Gruppe darstellt, die reaktionsfähig ist gegenüber geeigneten funktionellen Gruppen des Präpolymeren (A1).

Ist dabei das Präpolymer (A1) selbst aus mehreren Bausteinen (A11, A12 ...) zusammengesetzt, so ist es nicht unbedingt erforderlich, daß aus diesen Bausteinen (A11, A12 ...) zunächst das Präpolymer (A1) hergestellt wird, welches anschließend mit dem Silan (A2) zum fertigen Polymer (A) umgesetzt wird. So ist hier auch eine Umkehrung der Reaktionsschritte möglich, bei dem einer oder mehrere Bausteine (A11, A12 ...) zunächst mit dem Silan (A2) umgesetzt werden, und die dabei erhaltenen Verbindungen erst anschließend mit den verbleibenden Bausteinen (A11, A12 ...) zum fertigen Polymer (A) umgesetzt werden. Beispiele für Präpolymere (A1) bestehend aus Bausteinen A11, A12 sind OH-, NH- oder NCO-terminierte Polyurethane und Polyharnstoffe, welche sich aus Polyisocyanaten (Baustein A11) sowie Polyolen (Baustein A12) herstellen lassen.

Bevorzugte Polymere (A) mit Silanterminierungen der allgemeinen Formel (1) sind silanterminierte Polyether und Polyurethane, besonders bevorzugt Polyether, die aus Organosilan (A2) der allgemeinen Formel (4) und dem Präpolymeren (A1) hergestellt werden.

Bei einer bevorzugten Herstellungsweise der Polymere (A) wird vorzugsweise ein Silan (A2) eingesetzt, das ausgewählt wird aus Silanen der allgemeinen Formeln (5)

OCN-(CH₂)ₘ-SiR¹ₐ(OR²)₃₋ₐ (5)

wobei
- **R¹, R², R³** und **a**: die oben angegebenen Bedeutungen besitzen und
- **m**: gleich 1 oder 3 ist.

Bei der Herstellung des Polymeren (A) sind die Konzentrationen aller an sämtlichen Reaktionsschritten beteiligter Isocyanatgruppen und aller isocyanatreaktiver Gruppen sowie die Reaktionsbedingungen bevorzugt so gewählt, daß im Laufe der Polymersynthese sämtliche Isocyanatgruppen abreagieren. Das fertige Polymer (A) ist somit bevorzugt isocyanatfrei.

Als Polyole für die Herstellung der Polymere (A) eignen sich besonders aromatische und aliphatische Polyesterpolyole und Polyetherpolyole, wie sie in der Literatur vielfach beschrieben sind. Prinzipiell können aber sämtliche polymeren, oligomeren oder auch monomeren Alkohole mit ein oder mehr OH-Funktionen eingesetzt werden.

Vorzugsweise bedeutet **R¹** einen Phenylrest oder Alkyl- oder Alkenylrest mit 1-6 Kohlenstoffatomen, insbesondere Methyl-, Ethyl- oder Vinylrest.
Vorzugsweise bedeutet **R²** einen Alkylrest mit 1-3 Kohlenstoffatomen, insbesondere Methyl- oder Ethylrest.
Vorzugsweise bedeutet **R³** Wasserstoff, einen Phenylrest oder Alkyl- oder Alkenylrest mit 1-6 Kohlenstoffatomen, insbesondere Methyl-, Ethyl- oder n-Propylrest.

Zusätzlich werden zu den Silanen (B) noch Aminoalkyl-alkoxysilane (C) eingesetzt. Dadurch wird eine besonders hohe Haftung erreicht, die weit höher ausfällt, als bei Verwendung von nur Silan (B) oder (C).

Die erfindungsgemässen Polymerabmischungen können ein- oder zweikomponentig formuliert werden. In zweikomponentigen Polymerabmischungen werden die Silane (B) und (C) vorzugsweise der Basiskomponente zugesetzt. Besonders bevorzugt sind jedoch einkomponentig härtende Polymerabmischungen. Vorzugsweise werden bei der Herstellung der einkomponentig härtenden Polymerabmischungen zuerst Silan (B), dann Silan (C) zugesetzt.

Bevorzugte Aminoalkyl-alkoxysilane (C) sind solche der allgemeinen Formel 6

R⁷ᵤR⁸ᵥSi(OR⁹)₄₋ᵤ₋ᵥ (6),

in der
- **R⁷**: einen gegebenenfalls halogensubstuierten Alkyl-, Cycloalkyl-, Alkenyl- oder Arylrest mit 1-10 Kohlenstoffatomen,
- **R⁸**: einen einwertigen, gegebenenfalls halogensubstituierten, SiC-gebundene Aminogruppe aufweisende C₁-C₃₀-Kohlenwasserstoffrest,
- **R⁹**: einen Alkylrest mit 1-6 Kohlenstoffatomen oder einen ω-Oxaalkyl-alkylrest mit insgesamt 2-10 Kohlenstoffatomen,
- **u**: 0, 1 oder 2 und
- **v**: 1, 2 oder 3 bedeuten,
mit der Maßgabe, daß die Summe aus **u** und **v** kleiner oder gleich 3 ist.

Beispiele und bevorzugte Beispiele für den Rest **R⁷** sind vorstehend bei Rest **R¹** aufgeführt.
Beispiele und bevorzugte Beispiele für den Rest **R⁸** sind vorstehend bei Rest **R²** aufgeführt.

Bevorzugt handelt es sich bei Rest **R⁸** um einen Rest der allgemeinen Formel 7

R¹⁰₂NR¹¹- (7),

worin
- **R¹⁰**: Wasserstoffatom oder einwertige, gegebenenfalls substituierte C₁-C₁₀-Kohlenwasserstoffreste oder C₁-C₁₀-Aminokohlenwasserstoffreste und
- **R¹¹**: einen zweiwertigen C₁-C₁₅-Kohlenwasserstoffrest bedeuten.

Beispiele für den Rest **R¹⁰** sind die für Rest **R¹** gegebenen Beispiele für Kohlenwasserstoffreste, sowie mit Aminogruppen substituierte Kohlenwasserstoffreste, wie Aminoalkylreste, wobei der Aminoethylrest besonders bevorzugt ist.

Beispiele für Rest **R¹¹** sind der Methylen-, Ethylen-, Propylen-, Butylen-, Cyclohexylen-, Octadecylen-, Phenylen- und Butenylenrest. Bevorzugt handelt es sich bei Rest **R¹¹** um zweiwertige Kohlenwasserstoffreste mit 1 bis 10 Kohlenstoffatomen, besonders bevorzugt 1 bis 4 Kohlenstoffatomen, insbesondere um den n-Propylenrest.

Beispiele für den Rest **R⁸** sind Aminopropyl-, Aminoethylaminopropyl-, Ethylaminopropyl-, Butylaminopropyl-, Cyclohexylaminopropyl-, Phenylaminopropyl-Aminomethyl-, Aminoethylaminomethyl-, Ethylaminomethyl-, Butylaminomethyl-, Cyclohexylaminomethyl-, Phenylaminomethylgruppen.

Vorzugsweise bedeutet bei dem Silan (B) **R⁴** Wasserstoff. Vorzugsweise bedeutet **n** die Zahlen 1 oder 3. Beispiele und bevorzugte Beispiele für den Rest **R⁵** sind vorstehend bei Rest **R¹** aufgeführt.

Beispiele und bevorzugte Beispiele für den Rest **R⁶** sind vorstehend bei Rest **R²** aufgeführt.

Vorzugsweise weisen die Silane (B) Silylgruppen auf, die ausgewählt werden aus Trimethoxy-, Triethoxy-, Dimethoxymethyl-, Diethoxymethylsilylgruppen.

In den erfindungsgemäßen Polymerabmischungen beträgt der Anteil an alkoxysilanterminierten Polymeren (A) vorzugsweise 10-70 Gew.-%, besonders bevorzugt 15-50 Gew.-%, insbesondere 20-40 Gew.-%. Der Anteil an Silan (B) der allgemeinen Formel (2) beträgt vorzugsweise 0,1-10 Gew.-%, besonders bevorzugt 0,5-5 Gew.-%, insbesondere 1-3 Gew.-%. Der Anteil an Aminoalkyl-alkoxysilan (C) beträgt vorzugsweise 0,1-10 Ges.-%, besonders bevorzugt 0,1-5 Gew.-%, insbesondere 0,2-3 Gew.-%.

Die erfindungsgemäßen Polymerabmischungen können Kondensationskatalysatoren enthalten, beispielsweise Titanatester, wie Tetrabutyltitanat, Tetrapropyltitanat, Tetraisopropyltitanat, Tetraacetylacetonat-titanat; Zinnverbindungen, wie Dibutylzinndilaurat, Dibutylzinnmaleat, Dibutylzinndiacetat, Dibutylzinndioctanoat, Dibutylzinnacetylacetonat, Dibutytzinnoxid, oder entsprechende Verbindungen des Dioctylzinn;
basische Katalysatoren, die mit dem Aminoalkyl-alkoxysilan (C) identisch sein können, wie Aminopropyltrimethoxysilan, Aminopropyltriethoxysilan, N-(2-Aminoethyl)-aminopropyltrimethoxysilan, und andere organische Amine, wie Triethylamin, Tributylamin, 1,4-Diazabicyclo[2,2,2]octan, N,N-Bis-(N,N-dimethyl-2-aminoethyl)-methylamin, N,N-Dimethylcyclohexylamin, N,N-Dimethylphenlyamin, N-Ethylmorpholinin etc.; Saure Katalysatoren, wie Phosphorsäure- bzw. Phosphorsäureester, Toluolsulfonsäuren, Mineralsäuren.

Bevorzugt sind Aminosilane alleine oder in Kombination mit Dibutylzinnverbindungen.
Die Kondensationskatalysatoren werden bevorzugt in Konzentrationen von 0,01-10 Gew.-%, besonders bevorzugt 0,1- 2 Gew.-% der Polymerabmischungen eingesetzt.
Die verschiedenen Katalysatoren können sowohl in reiner Form als auch als Mischungen verwendet werden.

Die erfindungsgemäßen Polymerabmischungen können Füllstoffe enthalten, beispielsweise Kalciumcarbonate in Form von natürlichen gemahlenen Kreiden, gemahlenen und beschichteten Kreiden, gefällten Kreiden, gefällten und beschichteten Kreiden, Tonmineralien, Bentonite, Kaoline, Talkum, Titandioxide, Aluminiumoxid, Aluminiumtrihydrat, Magnesiumoxid, Magnesiumhydroxy, Ruße, gefällte oder pyrogene Kieselsäuren.
Die Füllstoffe werden bevorzugt in Konzentrationen von 10-70 Gew.-%, besonders bevorzugt 30-60 Gew.-% der Polymerabmischungen eingesetzt.

Die erfindungsgemässen Polymerabmischungen können Wasserfänger und Silanvernetzer enthalten, beispielsweise Vinylsilane wie Vinyltrimethoxy-, Vinyltriethoxy-, Vinylmethyldimethoxy-, O-Methylcarbamatomethyl-methyldimethoxysilan, O-Methylcarbamatomethyl-trimethoxysilan, O-Ethylcarbamatomethyl-methyldiethoxysilan, O-Ethylcarbamatomethyl-triethoxysilan, allgemein Alkylalkoxysilane oder aber auch weitere organofunktionelle Silane.
Die Wasserfänger und Silanvernetzer werden bevorzugt in Konzentrationen von 0,1 - 10 Gew.-%, besonders bevorzugt 0.5-2 Gew.-% der Polymerabmischungen eingesetzt.

Die erfindungsgemäßen Polymerabmischungen können Weichmacher enthalten, beispielsweise Phthalatester, wie Dioctylphthalat, Diisooctylphthalat, Diundecylphthalat, Adipinsäureester, wie Dioctyladipat, Benzoesäureester, Glycolester, Phosphorsäureester, Polyester, Polyether, Polystyrole, Polybutadiene, Polyisobutene, paraffinische Kohlenwasserstoffe, hohere, verzweigte Kohlenwasserstoffe etc. Die Weichmacher werden bevorzugt in Konzentrationen von bis zu 40 Gew.-%, der Polymerabmischungen eingesetzt.

Die erfindungsgemäßen Polymerabmischungen können Thixotropiermittel enthalten, beispielsweise hydrophile pyrogene Kieselsäuren, beschichtete pyrogene Kieselsäuren, gefällte Kieselsäuren, Polyamidwache, hydrierte Ricinusöle, Stearatsalze oder gefällte Kreiden. Auch die o.g. Füllstoffe können zur Einstellung der Fließeigenschaften benutzt werden. Die Thixotropiermittel werden bevorzugt in Konzentrationen von 1-5 Gew.-% der Polymerabmischungen eingesetzt.

Die erfindungsgemäßen Polymerabmischungen können weiterhin Lichtschutzmittel, wie sogenannte HALS-Stabilisatoren, Fungizide, Flammschutzmittel, Pigmente etc. enthalten, wie sie für den Einsatz in herkömmlichen alkoxyvernetzenden einkomponentigen Massen bekannt sind.

Zur Erzeugung der jeweils gewünschten Eigenschaftsprofile sowohl der unvernetzten Polymerabmischungen als auch der ausgehärteten Massen werden vorstehende Zusätze bevorzugt eingesetzt.

Vorzugsweise wird bei der Herstellung der erfindungsgemässen Polymerabmischungen zuerst eine Mischung aus Polymer (A) und Füllstoff hergestellt, anschliessend Silan (B) eingemischt und danach Aminoalkyl-alkoxysilan (C) zugemischt.

Für die erfindungsgemäßen Polymerabmischungen existieren zahllose verschiedene Anwendungen im Bereich der Kleb-, Dicht- und Fugendichtstoffe, Oberflächenbeschichtungen sowie auch bei der Herstellung von Abformmassen und Formteilen.

Dabei sind die erfindungsgemäßen Polymerabmischungen für zahllose unterschiedliche Untergründe wie z.B. mineralische Untergründe, Metalle, Kunststoffe, Glas, Keramik etc. geeignet.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind soweit nicht anders angegeben, alle Mengen- und Prozentangaben auf das Gewicht bezogen.

### Beispiele

### Beispiel 1

### Formulierungen mit einem silanterminierten Polyether mit Methylen-Methyldimethoxysilylendgruppen (alpha-Dimethoxy)

293 g des silanterminierten Polyethers, erhältlich unter der Bezeichung GENIOSIL® STP-E10 bei der Wacker Chemie AG werden in einem Laborplanetenmischer der Fa. PC-Laborsystem, ausgestatte mit zwei Balkenmischern bei ca. 25 °C mit 75 g Diisodecylphthalat (Fa. Merck) und O-Methylcarbamatomethyltrimethoxysilan, erhältlich unter der Bezeichung GENIOSILC® XL63 (Wacker Chemie AG), 2 Minuten bei 200 U/min vermischt. Danach werden 68 g einer hyrophobierten Kieselsäure HDK® H2000 (Wacker Chemie AG) eingerührt bis sie homogen verteilt ist. Anschließend werden 295 g Kreide BLR3 (Fa. Omya) eingebracht und die Füllstoffe unter Rühren eine Minute bei 600 U/min aufgeschlossen. Nach Einarbeitung der Kreide werden 15 g Trimethoxysilylpropyl-bernsteinsäureanhydrid, erhältich unter der Bezeichnung GENIOSIL® GF20 (Wacker Chemie AG) 1 Minute bei 200 U/min verteilt. Abschließend werden 0,75 g Dibutylzinndilaurat (Fa. Merck) und 3,8 g Aminoethylaminopropyl-trimethoxysilan (GENIOSIL® GF91 - Wacker Chemie AG) 1 Minute bei 200 U/min eingemischt, 2 Minuten bei 600 U/min und 1 Minute bei 200 U/min im Teilvakuum (ca. 100 mbar) homogenisiert und blasenfrei gerührt.
Die Formulierung wird in 310 ml PE-Kartuschen abgefüllt und einen Tag bei 25 °C gelagert.

Die Vergleichsbeispiele 2 - 4 wurden analog hergestellt.

### Haftungsverhalten auf verschiedenen Substraten

Die Metalle werden mit Methylethylketon gereinigt, Glas mit wässriger Tensidlösung, dann mit VE-Wasser und nachfolgend Methylethylketon, Kunststoffe mit Ethanol.
Anschließend wird der Dichtstoff in Raupen von ca. 5-7 mm Dicke aufgetragen. Nach einwöchiger Lagerung bei Raumtemperatur erfolgt eine vierwöchige Lagerung in Wasser bei Raumtemperatur.

### Lagerungsbedingungen:

- A: = 7 Tage Raumtemperatur
- B: = 7 Tage Raumtemperatur +
2 Wochen Wasserlagerung bei Raumtemperatur
- C: = 7 Tage Raumtemperatur +
4 Wochen Wasserlagerung bei Raumtemperatur
Die Holzprüfkörper werden nicht unter Wasser, sondern 2 bzw. 4 Wochen im Klimaschrank bei 50°C / 100 % relativer Luftfeuchte gelagert.

### Beurteilung:

- +: = gute Haftung (Kohäsionsriß)
- φ: = Teilhaftung (Rand- bzw. Zonenhaftung)
- -: = schlechte Haftung (Adhäsionsriß)

**Tabelle: Beispiel 1 und nicht erfindungsgemässe Vergleichsbeispiele 2 - 4. Die Verwendung von Aminosilanen verschlechtert das Haftungsprofil.**

| | 1 | | | 2-Vergleich | | | 3-Vergleich | | | 4-Vergleich | | |
|---|---|---|---|---|---|---|---|---|---|---|---|---|
| Silylterminiertes Polymer (GENIOSIL STP-E10) | 39,0% | | | 38,0% | | | 38,0% | | | 40,0% | | |
| Diisodecylphthalat | 10,0% | | | 10,0% | | | 10,0% | | | 10,0% | | |
| O-Methyl-carbamatomethyl-trimethoxysilan | 0,5% | | | 0,5% | | | 0,5% | | | 0,5% | | |
| Hydrophobierte pyrogene Kieselsäure | 9,0% | | | 9,0% | | | 9,0% | | | 9,0% | | |
| Gemahlene beschichtete Kreide | 39,0% | | | 38,0% | | | 38,0% | | | 40,0% | | |
| Trimethoxysilylpropyl-bernsteinsäureanhydrid | 2,0% | | | | | | | | | | | |
| Aminopropyltriethoxysilan | | | | 2,0% | | | 2,0% | | | | | |
| Aminopropyltrimethoxysilan | | | | 2,0% | | | | | | | | |
| Dibutylzinndilaurat | 0,1% | | | 0,1% | | | 0,1% | | | 0,1% | | |
| Aminoethylaminopropyltrimethoxysilan | 0,5% | | | 0,5% | | | 2,5% | | | 0,5% | | |
| | | | | | | | | | | | | |

| **Haftung:** | A | B | C | A | B | C | A | B | C | A | B | C |
|---|---|---|---|---|---|---|---|---|---|---|---|---|
| ***Metalle*** | | | | | | | | | | | | |
| Alu | ∅ | + | + | ∅ | - | - | + | - | - | - | ∅ | ∅ |
| Aluminium anodisch passiviert | ∅ | ∅ | ∅ | ∅ | ∅ | ∅ | ∅ | ∅ | ∅ | - | - | - |
| V2A Stahl | + | - | - | ∅ | - | - | ∅ | - | - | + | ∅ | ∅ |

| ***Silikatisch*** | | | | | | | | | | | | |
|---|---|---|---|---|---|---|---|---|---|---|---|---|
| Beton | + | - | - | + | - | - | + | - | - | - | - | - |
| Luftseite von Floatglas | | | | ∅ | - | - | ∅ | - | - | + | + | ∅ |

| ***Holz*** | | | | | | | | | | | | |
|---|---|---|---|---|---|---|---|---|---|---|---|---|
| Holz natur | + | + | + | + | + | ∅ | + | + | + | + | ∅ | ∅ |
| Holz lackiert (Alkydharz, Glasurit®) | - | + | + | - | - | - | ∅ | - | - | - | - | - |

| ***Kunststoffe*** | | | | | | | | | | | | |
|---|---|---|---|---|---|---|---|---|---|---|---|---|
| Makrolon® (Fa.Röhm) | + | + | ∅ | ∅ | + | ∅ | - | - | - | - | - | - |
| -Plexiglas® GS/SW (Fa.Röhm) | + | + | - | ∅ | + | + | ∅ | + | + | - | + | + |
| PVC grau (Fa.Vinnolit) | - | - | - | - | - | - | - | - | - | - | - | - |

## Patentansprüche

1. Polymerabmischungen, die
A) alkoxysilanterminierte Polymere (A) mit mindestens einer Endgruppe der allgemeinen Formel (1)
-A-(CH₂)ₘ-SiR¹ₐ(OR²)₃₋ₐ (1)
wobei
**A** eine zweibindige Bindegruppe ausgewählt aus -O-, -S-, -(_{R}³)_{N}-, -O-CO-N(R³)-, -N(R³)-CO-O-, -N(R³)-CO-NH-, -NH-CO-N(R³) -, -N(R³)-CO-N(R³)-,
**R¹** einen gegebenenfalls halogensubstuierten Alkyl-, Cycloalkyl-, Alkenyl- oder Arylrest mit 1-10 Kohlenstoffatomen,
**R²** einen Alkylrest mit 1-6 Kohlenstoffatomen oder einen ω-Oxaalkyl-alkylrest mit insgesamt 2-10 Kohlenstoffatomen,
**R³** Wasserstoff, einen gegebenenfalls halogensubstuierten cyclischen, linearen oder verzweigten C₁ bis C₁₈-Alkyl- oder Alkenylrest oder einen C₆- bis C₁₈-Arylrest,
**a** eine ganze Zahl von 0 bis 2 und
**m** eine ganze Zahl von 1 bis 6 bedeuten,
**B)** Bernsteinsäureanhydrid-alkoxysilan (B) der allgemeinen Formel (2) 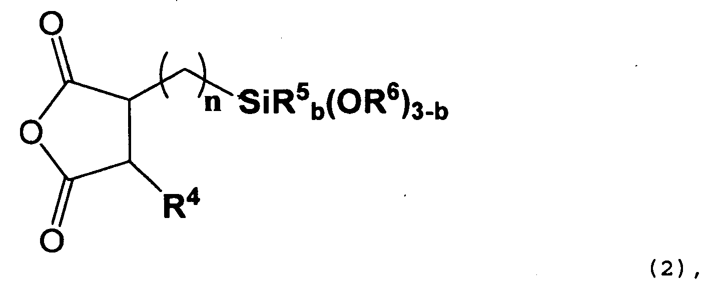
wobei
**R⁴** Wasserstoff oder einen Alkylrest mit 1-6 Kohlenstoffatomen
**R⁵** einen gegebenenfalls halogensubstuierten Alkyl-, Cycloalkyl-, Alkenyl- oder Arylreste mit 1-10 Kohlenstoffatomen,
**R⁶** einen Alkylrest mit 1-6 Kohlenstoffatomen oder ω-Oxaalkyl-alkylrest mit insgesamt 2-10 Kohlenstoffatomen,
**n** eine ganze Zahl von 1 bis 6 und
**b** eine ganze Zahl von 0 bis 2 bedeuten und Aminoalkyl-alkoxysilan (C) enthalten.

2. Polymerabmischungen nach Anspruch 1, bei denen die alkoxysilanterminierten Polymere (A) silanterminierte Polyether oder Polyurethane sind.

3. Polymerabmischungen nach Anspruch 1 oder 2, bei denen m die Zahl 1 bedeutet.

4. Polymerabmischungen nach Anspruch 1 bis 3, bei denen die Bindegruppe **A** die Bedeutung -O-CO-NH- aufweist.

5. Polymerabmischungen nach Anspruch 1 bis 4, bei denen n die Zahl 3 bedeutet.

6. Polymerabmischungen nach Anspruch 1 bis 5, bei denen **R⁴** Wasserstoff bedeutet.

7. Polymerabmischungen nach Anspruch 1 bis 6, bei denen **R²** eine Methyl- oder Ethylgruppe bedeutet.

8. Verfahren zur Herstellung der Polymerabmischungen gemäss Anspruch 1 bis 7, bei dem zuerst eine Mischung aus Polymer
(A) und Füllstoff hergestellt, anschliessend Bernsteinsäureanhydrid-alkoxysilan (B) eingemischt und danach Aminoalkyl-alkoxysilan (C) zugemischt werden.

9. Verwendung der Polymerabmischungen gemäss Anspruch 1 bis 7 im Bereich der Kleb-, Dicht- und Fugendichtstoffe.

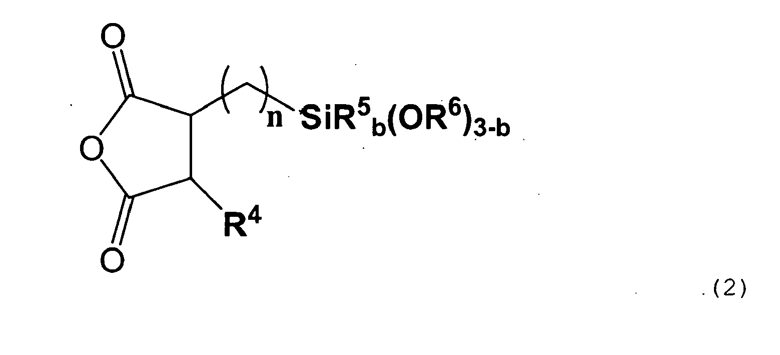

## Claims

1. Polymer blends which comprise:
A) alkoxysilane-terminated polymers (A) having at least one end group of the general formula (1)
-A-(CH₂)ₘ-SiR¹ₐ(OR₂)₃₋ₐ (1)
where
**A** is a divalent linking group selected from -O-, -S-, -(R³)N-, -O-CO-N(R³)-, -N(R³)-CO-O-, -N(R³)-CO-NH-, -NH-CO-N(R³)-, -N(R³)-CO-N(R³)-,
**R¹** is an optionally halogen-substituted alkyl, cycloalkyl, alkenyl or aryl radical having 1-10 carbon atoms,
**R²** is an alkyl radical having 1-6 carbon atoms or an ω-oxaalkyl-alkyl radical having a total of 2-10 carbon atoms,
**R³** is hydrogen, an optionally halogen-substituted cyclic, linear or branched C₁ to C₁₈ alkyl or alkenyl radical or a C₆ to C₁₈ aryl radical,
**a** is an integer from 0 to 2, and
**m** is an integer from 1 to 6,
B) succinic anhydride-alkoxysilane (B) of the general formula (2) 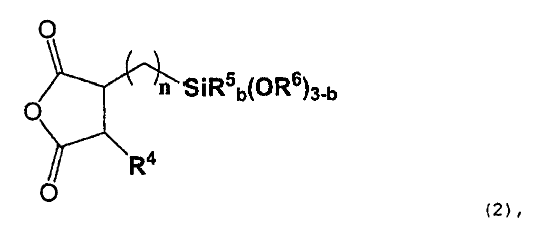
where
**R⁴** is hydrogen or an alkyl radical having 1-6 carbon atoms,
**R⁵** is an optionally halogen-substituted alkyl, cycloalkyl, alkenyl or aryl radical having 1-10 carbon atoms,
**R⁶** is an alkyl radical having 1-6 carbon atoms or an ω-oxaalkyl-alkyl radical having a total of 2-10 carbon atoms,
**n** is an integer from 1 to 6, and
**b** is an integer from 0 to 2, and aminoalkylalkoxysilane (C).

2. Polymer blends according to Claim 1, wherein the alkoxysilane-terminated polymers (A) are silane-terminated polyethers or polyurethanes.

3. Polymer blends according to Claim 1 or 2, wherein m is the number 1.

4. Polymer blends according to Claim 1 to 3, wherein the linking group **A** has the definition -O-CO-NH-.

5. Polymer blends according to Claim 1 to 4, wherein n is the number 3.

6. Polymer blends according to Claim 1 to 5, wherein **R⁴** is hydrogen.

7. Polymer blends according to Claim 1 to 6, wherein **R²** is a methyl or ethyl group.

8. Process for preparing the polymer blends according to Claim 1 to 7, wherein first a mixture of polymer (A) and filler is prepared, then succinic anhydride-alkoxysilane (B) is mixed in, and thereafter aminoalkylalkoxysilane (C) is admixed.

9. Use of the polymer blends according to Claim 1 to 7 in the area of adhesives, sealants, and joint-sealants.

## Revendications

1. Mélanges polymères, qui contiennent
A) des polymères terminés par alcoxysilane (A) comprenant au moins un groupe terminal de formule générale (1)
-A-(CH₂)ₘ-SiR¹ₐ(OR²)₃₋ₐ (1)
où
A signifie un groupe de liaison divalent choisi parmi -O-, -S-, (R³)N-, -O-CO-N(R³)-, -N(R³)-CO-O-, -N(R³)-CO-NH-, -NH-CO-N(R³)-, -N(R³)-CO-N(R³)-,
R¹ signifie un radical alkyle, cycloalkyle, alcényle ou aryle comprenant 1-10 atomes de carbone, le cas échéant substitué par halogène,
R² signifie un radical alkyle comprenant 1-6 atomes de carbone ou un radical ω-oxaalkylalkyle comprenant au total 2-10 atomes de carbone,
R³ signifie hydrogène, un radical C₁ à C₁₈-alkyle ou alcényle cyclique, linéaire ou ramifié, le cas échéant substitué par halogène ou un radical C₆ à C₁₈-aryle,
a vaut un nombre entier de 0 à 2 et
m vaut un nombre entier de 1 à 6,
B) un alcoxysilane d'anhydride de l'acide succinique (B) de formule générale (2) 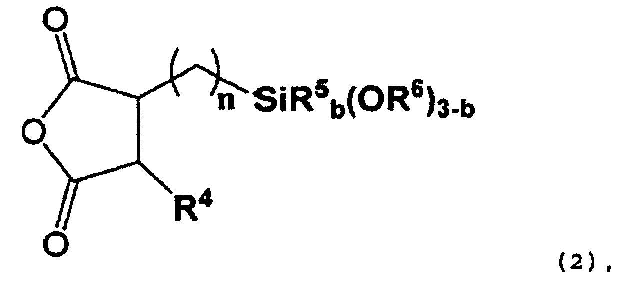 où
R⁴ signifie hydrogène ou un radical alkyle comprenant 1-6 atomes de carbone,
R⁵ signifie un radical alkyle, cycloalkyle, alcényle ou aryle comprenant 1-10 atomes de carbone, le cas échéant substitué par halogène,
R⁶ signifie un radical alkyle comprenant 1-6 atomes de carbone ou un radical ω-oxaalkylalkyle comprenant au total 2-10 atomes de carbone,
n vaut un nombre entier de 1 à 6 et
b vaut un nombre entier de 0 à 2 et
un aminoalkylalcoxysilane (C).

2. Mélanges polymères selon la revendication 1, dans lesquels les polymères terminés par alcoxysilane (A) sont des polyéthers ou des polyuréthanes terminés par silane.

3. Mélanges polymères selon la revendication 1 ou 2, dans lesquels m vaut 1.

4. Mélanges polymères selon la revendication 1 à 3, dans lesquels le groupe de liaison A présente la signification -O-CO-NH-.

5. Mélanges polymères selon la revendication 1 à 4, dans lesquels n vaut 3.

6. Mélanges polymères selon la revendication 1 à 5, dans lesquels R⁴ signifie hydrogène.

7. Mélanges polymères selon la revendication 1 à 6, dans lesquels R² signifie un groupe méthyle ou éthyle.

8. Procédé pour la préparation de mélanges polymères selon la revendication 1 à 7, dans lequel on prépare d'abord un mélange de polymère (A) et d'une charge, puis on incorpore l'alcoxysilane d'anhydride de l'acide succinique (B) puis on ajoute l'aminoalkylalcoxysilane (C).

9. Utilisation des mélanges polymères selon la revendication 1 à 7 dans le domaine des adhésifs, des matériaux d'étanchéité et de colmatage.
